# EUROPÄISCHE PATENTANMELDUNG

(11) **EP 1 052 336 A2**
(43) Veröffentlichungstag der Anmeldung: **15.11.2000**
(21) Anmeldenummer: 00107672.8
(22) Anmeldetag: 10.04.2000
(51) Int. Cl.: E03B 9/08, F16K 31/50

(54) **Schneeanlage-Hydrant**

(30) Priorität: 14.05.1999 AT 86199
(71) Anmelder: Schlemmer, Franz, 9990 Nussdorf-Debant (AT); Waibel, Kurt, 6971 Hard (AT)
(72) Erfinder: Schlemmer, Franz, 9990 Nussdorf-Debant (AT); Waibel, Kurt, 6971 Hard (AT)
(74) Vertreter: Torggler, Paul Norbert, Dr.

(57) **Zusammenfassung**

Schneeanlage-Hydrant, der an eine Wasserzuführungsleitung anschließbar ist und eine Entnahmestelle zum Anschluß einer Schneekanone und eine Absperreinrichtung zum Absperren und Öffnen des Wasserflusses zur Entnahmestelle aufweist, wobei die Absperreinrichtung eine in einer Gewindebohrung angeordnete Gewindespindel umfaßt, die über eine Betätigungswelle verdrehbar ist. An einer sich im Gehäuse (1) des Schneeanlage-Hydranten befindlichen Stelle der Betätigungswelle (13) ist ein Führungsteil (9) angeordnet, der gegenüber einer mit der Gewindespindel (3) in starrer Verbindung stehenden, vorzugsweise einstückig mit dieser ausgebildeten, Übertragungswelle (7) axial verschiebbar ist, aber mit dieser in drehfester Verbindung steht.

## Beschreibung

Die Erfindung betrifft einen Schneeanlage-Hydranten, der an eine Wasserzuführungsleitung anschließbar ist und eine Entnahmestelle zum Anschluß einer Schneekanone sowie eine Absperreinrichtung zum Absperren und Öffnen des Wasserflusses zur Entnahmestelle aufweist, wobei die Absperreinrichtung eine in einer Gewindebohrung angeordnete Gewindespindel umfaßt, die über eine Betätigungswelle verdrehbar ist.

Derartige Schneeanlage-Hydranten können neben einer Schipiste stationär angeordnet werden, insbesondere in dafür vorgesehen Unterflurschächten, um bei Bedarf einen einfachen und raschen Anschluß von Schneekanonen zu ermöglichen. Im Gegensatz zu herkömmlichen Hydranten ist bei einem Schneeanlage-Hydranten der Wasserdurchsatz wesentlich geringer, da in der Regel jeweils nur eine einzige Schneekanone pro Hydrant angeschlossen wird. Weiters muß eine genauere Flußregelung möglich sein und die Frostsicherheit muß gewährleistet werden.

In zunehmendem Maße wird eine Automatisierung der Steuerung von Beschneiungsanlagen gewünscht. Zu diesem Zweck werden die Betätigungswellen der Schneeanlage-Hydranten mit Stellmotoren verbunden. Es ist dabei üblicherweise ein beträchtlicher Montageaufwand unter Verwendung zusätzlicher Führungs- und Befestigungskonsolen erforderlich.

Die US 5,547,164 A zeigt einen Schneeanlage-Hydranten, dessen Betätigungswelle für den Antrieb durch Stellmotoren ausgebildet ist. Der Antrieb ist in einem Gehäuse, das auf der Kappe des Schneeanlage-Hydranten montiert wird, angeordnet.

Aufgabe der Erfindung ist es, einen verbesserten Schneeanlage-Hydranten der eingangs erwähnten Art bereitzustellen, durch den insbesondere wahlweise eine einfache Automatisierung oder eine einfache Betätigung der Schneeanlage ermöglicht werden soll.

Erfindungsgemäß gelingt dies dadurch, daß an einer sich im Gehäuse des Schneeanlage-Hydranten befindlichen Stelle der Betätigungswelle ein Führungsteil angeordnet ist, der gegenüber einer mit der Gewindespindel in starrer Verbindung stehenden, vorzugsweise einstückig mit dieser ausgebildeten, Übertragungswelle axial verschiebbar ist, aber mit dieser in drehfester Verbindung steht.

Durch die axiale Verschiebbarkeit zwischen Übertragungswelle und Betätigungswelle kann eine Axialbewegung der Betätigungswelle beim Öffnen und Schließen des Hydranten vermieden werden. Durch die Anordnung des Führungsteiles im Gehäuse ist sichergestellt, daß ein herkömmlicher Stellmotor in einfacher Weise direkt auf den erfindungsgemäßen Schneeanlage-Hydranten aufgebaut werden kann.

Günstigerweise ist die Betätigungswelle in einem Montageteil drehbar gelagert, welcher am Kopfteil des Gehäuses des Schneeanlage-Hydranten befestigt ist und von diesem demontierbar ist. Es wird dadurch eine einfache Montage bzw. Demontage des Durchflußregelteiles der Absperreinrichtung ermöglicht, wie in der Figurenbeschreibung genauer erläutert werden wird.

Wenn gemäß einem weiteren Aspekt der Erfindung die Entnahmestelle zum Anschluß einer Schneekanone an einer vom Montageteil unterschiedlichen Stelle am Gehäuse des Schneeanlage-Hydranten angeordnet ist, ist die Montage bzw. Demontage des Durchflußregelteiles ohne eine Demontage des Hydrantenkopfteiles bzw. eines an der Entnahmestelle angebrachten Anschlußteiles möglich.

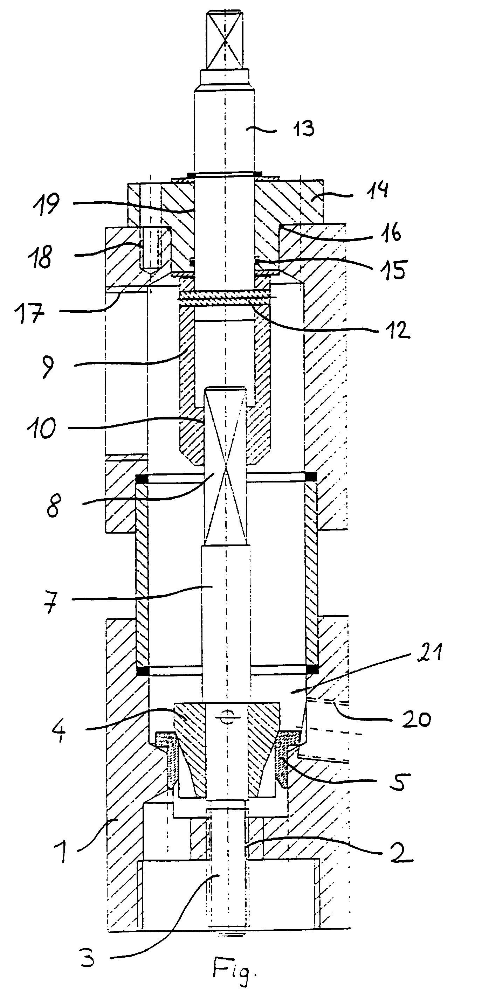

Weitere Vorteile und Einzelheiten der Erfindung werden im folgenden anhand der beiliegenden Zeichnung erläutert.

In dieser zeigt die einzige Figur einen Querschnitt durch die Längsmittelachse eines erfindungsgemäßen Schneeanlage-Hydranten.

Im Gehäuse 1 des Schneeanlage-Hydranten ist eine Gewindebohrung 2 vorgesehen, in der eine Gewindespindel 3 drehbar angeordnet ist, welche vorzugsweise ein Trapezgewinde (beispielsweise TR 14x3) aufweist. Die Gewindespindel 3 ist mit einem Durchflußregler 4 starr verbunden, der in einer Dichtbuchse 5 im Gehäuse 1 sitzt. Bei einer Drehung der Gewindespindel 3 verschiebt sich der Durchflußregler 4 axial gegenüber der Dichtbuchse 5 und gibt dadurch den Wasserdurchfluß durch die Dichtbuchse 5 mehr oder weniger frei.

Die Gewindespindel 3 ist einstückig mit einer Übertragungswelle 7 ausgebildet, auf der der Durchflußregler 4 drehfest und unverschiebbar angeordnet ist. Im Bereich 8 ihres freien Endes ist die Übertragungswelle 7 als Profilwelle, vorzugsweise als Vierkantwelle, ausgebildet. Der als Profilwelle ausgebildete Bereich 8 der Übertragungswelle 7 ragt in eine Profilbohrung 10 eines Führungsteiles 9, wobei das Innenprofil der Profilbohrung 10 dem Profil des Bereiches 8 der Übertragungswelle entspricht. Die Profilbohrung 10 mündet in einen Hohlraum 11 mit einem größeren Durchmesser als die Profilbohrung, der im Inneren des Führungsteiles 9 angeordnet ist.

Die Übertragungswelle 7 ist dadurch gegenüber dem Führungsteil 9 axial verschiebbar, steht aber mit diesem in drehfester Verbindung. Der Führungsteil 9 steht über einen Querstift 12 mit einer Betätigungswelle 13, die in einem Montageteil 14 drehbar gelagert ist, in drehfester Verbindung. Es kann somit insgesamt durch eine Verdrehung der Betätigungswelle 13 die Gewindespindel 3 in der Gewindebohrung 2 verdreht werden, sodaß sich der Durchflußregler 4 in der Dichtbuchse 5 axial verschiebt und die Durchflußöffnung für das Wasser verändert wird. Dabei führt die Betätigungswelle 13 aufgrund der Verschiebbarkeit zwischen Führungsteil 9 und Übertragungswelle 7 jedoch selbst keine Vertikalbewegung aus. Ein Stellmotor zur Automatisierung der Schneeanlage kann somit in einfacher Weise direkt auf den Montageteil 14 und die Betätigungswelle 13 aufgesetzt werden, ohne daß zusätzliche Führungs- und Betätigungskonsolen erforderlich wären.

Die Abdichtung des Montageteiles 14 im Kopfteil des Gehäuses 1 erfolgt über zwei O-Ringe 15, 16. Der erste O-Ring 16 ist zwischen Montageteil 14 und Kopfteil des Gehäuses 1 angeordnet und wird durch Einsetzen von Innensechskantschrauben in die Gewindebohrungen 18 im Kopfteil des Gehäuses festgeklemmt. Der zweite O-Ring 15 befindet sich in einer Nut in der Bohrung 19 des Montageteiles, in der die Betätigungswelle drehbar gelagert ist.

Um den Durchflußregler 4 zu montieren bzw. demontieren ist es nur notwendig, die Innensechskantschrauben aus den Gewindebohrungen 18 zu entfernen und der Montageteil 14 samt der Betätigungswelle 13 abzunehmen. In der Folge kann der Durchflußregler durch Herausdrehen der Gewindespindel 3 aus der Gewindebohrung 2 mittels der Übertragungswelle 7 herausgenommen werden. Es ist dabei auch nicht notwendig, ein in der Entnahmestelle 17 eingesetztes Anschlußteil bzw. eine daran angeschlossene Schneekanone abzunehmen.

Anstatt den hinteren Bereich der Übertragungswelle 7 als Profilwelle auszubilden und einen Führungsteil mit einer Profilbohrung vorzusehen, wäre die Herstellung einer drehfesten Verbindung bei axialer Verschiebbarkeit zwischen diesen beiden Teilen auch auf andere Weise denkbar und möglich. So könnte die Übertragungswelle 7 in ihrem rückwärtigen Bereich einen Querschlitz aufweisen, in den ein am Führungsteil 9 angeordneter Quersteg eingreift.

Zur Gewährleistung der Frostsicherheit des erfindungsgemäßen Schneeanlage-Hydranten ist im Gehäuse 1 ein Anschluß 20 für ein Drainageventil vorgesehen. Darin wird ein bei einem vorhandenen Wasserdruck geschlossenes und bei Drucklosigkeit geöffnetes Rückschlagventil vorgesehen. Bei geschlossenen Durchflußregler 4 kann dadurch das im Innenraum 21 des Gehäuses 1 enthaltene Wasser abfließen. Der Bereich unterhalb des Durchflußreglers 4 befindet sich dagegen ausreichend tief in der Erde, um außerhalb der Frostgrenze gelegen zu sein.

## Patentansprüche

1. Schneeanlage-Hydrant, der an eine Wasserzuführungsleitung anschließbar ist und eine Entnahmestelle zum Anschluß einer Schneekanone und eine Absperreinrichtung zum Absperren und Öffnen des Wasserflusses zur Entnahmestelle aufweist, wobei die Absperreinrichtung eine in einer Gewindebohrung angeordnete Gewindespindel umfaßt, die über eine Betätigungswelle verdrehbar ist, dadurch gekennzeichnet, daß an einer sich im Gehäuse (1) des Schneeanlage-Hydranten befindlichen Stelle der Betätigungswelle (13) ein Führungsteil (9) angeordnet ist, der gegenüber einer mit der Gewindespindel (3) in starrer Verbindung stehenden, vorzugsweise einstückig mit dieser ausgebildeten, Übertragungswelle (7) axial verschiebbar ist, aber mit dieser in drehfester Verbindung steht.

2. Schneeanlage-Hydrant nach Anspruch 1, dadurch gekennzeichnet, daß die Übertragungswelle (7) im Bereich (8) des Führungsteiles (9) als Profilwelle, vorzugsweise als Vierkantwelle, ausgebildet ist und in einer Profilbohrung (10), deren Innenprofil dem Profil des Bereiches (8) der Übertragungswelle entspricht und vorzugsweise eine Vierkantbohrung ist, des Führungsteiles (9) geführt ist.

3. Schneeanlage-Hydrant nach Anspruch 1 oder 2, dadurch gekennzeichnet, daß die Gewindespindel (3) mit einem Durchflußregler (4) verbunden ist, welcher durch Drehung der Gewindespindel (3) gegenüber einer Dichtbuchse (5) axial verschiebbar ist.

4. Schneeanlage-Hydrant nach einem der Ansprüche 1 bis 3, dadurch gekennzeichnet, daß die Betätigungswelle (13) in einem Montageteil (14) drehbar gelagert ist, welcher am Kopfteil des Gehäuses (1) des Schneeanlage-Hydrantes befestigt ist und von diesem demontierbar ist.

5. Schneeanlage-Hydrant nach Anspruch 4, dadurch gekennzeichnet, daß zwischen Montageteil (14) und Kopfteil des Gehäuses (1) ein O-Ring (16) zur Abdichtung vorgesehen ist.

6. Schneeanlagen-Hydrant nach einem der Ansprüche 1 bis 5, dadurch gekennzeichnet, daß im Gehäuse (1) ein Anschluß (20) für ein Drainageventil angeordnet ist.

7. Schneeanlage-Hydrant, der an eine Wasserzuführungsleitung anschließbar ist und eine Entnahmestelle zum Anschluß einer Schneekanone und eine Absperreinrichtung zum Absperren und Öffnen des Wasserflusses zur Entnahmestelle aufweist, wobei die Absperreinrichtung eine in einer Gewindebohrung angeordnete Gewindespindel umfaßt, die über eine Betätigungswelle verdrehbar ist, wobei die Betätigungswelle in einem Montageteil drehbar gelagert ist, welcher am Kopfteil des Gehäuses des Schneeanlage-Hydrantes befestigt ist und von diesem demontierbar ist, insbesondere nach einem der Ansprüche 1 bis 5, dadurch gekennzeichnet, daß die Entnahmestelle (17) zum Anschluß einer Schneekanone an einer vom Montageteil (14) unterschiedlichen Stelle am Gehäuse (1) des Schneeanlage-Hydranten angeordnet ist.
